Europäisches Patentamt

European Patent Office

Office européen des brevets

(19)

(11) Publication number: **0 010 376**
**B1**

(12) **EUROPEAN PATENT SPECIFICATION**

(45) Date of publication of patent specification: **11.08.82**

(21) Application number: **79302083.5**

(22) Date of filing: **02.10.79**

(51) Int. Cl.³: **A 61 C 17/00,** A 46 D 1/00,
A 46 B 9/04

(54) Methods of making tooth cleaning devices.

(30) Priority: **02.10.78 US 946608**

(43) Date of publication of application:
**30.04.80 Bulletin 80/9**

(45) Publication of the grant of the patent:
**11.08.82 Bulletin 82/32**

(84) Designated Contracting States:
**AT CH DE FR GB IT SE**

(56) References cited:
**DE - A - 2 135 574**
**DE - U - 1 841 426**
**DK - C - 11 528**
**US - A - 2 439 056**
**US - A - 2 599 191**
**US - A - 3 905 113**

(73) Proprietor: **Jacob, Joseph**
**30319 Ashton Lane**
**Bay Village, Ohio 44140 (US)**
(73) Proprietor: **Love, Charles Jackson**
**703 Oakhurst Street**
**Amherst, Ohio (US)**

(72) Inventor: **Jacob, Joseph**
**30319 Ashton Lane**
**Bay Village, Ohio 44140 (US)**
Inventor: **Love, Charles Jackson**
**703 Oakhurst Street**
**Amherst, Ohio (US)**

(74) Representative: **Tregear, George Herbert Benjamin
et al,**
**LLOYD WISE, TREGEAR & CO Norman House
105-109 Strand
London WC2R 0AE (GB)**

Courier Press, Leamington Spa, England.

Methods of making tooth cleaning devices

This invention relates to methods of making tooth cleaning devices.

As a prelude to the full understanding of the problem area of dental health to which the present invention is directed, it is recommended that US - A - 3 905 113 be read and understood. This prior teaching presents a novel approach to dental care by enabling the user to maintain a tactile sense and thus feel more accurately where he is in the masticatory region.

The prior art has been directed toward the provision of bristles which scrub the plaque as they sweep away trapped food particles. The better brushes are processed to reduce fragmented end structures which lacerate tender gingivae.

This invention builds on the teaching of US - A - 3 905 113. One purpose of the invention is to provide a novel bristle formation that fully eliminates fractured bristle ends and provides improved cleaning action to remove dental plaque.

The invention accordingly is concerned with a method of making a tooth cleaning device having a flexible sheet base member to be mounted on the user's finger and a plurality of bristles carried by the base member and extending therethrough.

The invention is based on the discovery that a superior double bristle with a tight loop end can not only solve the problem of bristle ends but also provide a scooping action to cut free and carry away tenacious plaque formation.

US - A - 2 599 191 discloses a toothbrush of conventional type with looped bristles. It is stated that the bristles may be formed of hard nylon plastics or any other suitable material. It is further stated that the proposals are preferably formed from initially fine strands cut to desired lengths and bent to form loops. The bristles so formed are stated to have the function of trapping foreign matter internally of the looped portions, thereby providing more positive means for removing foreign matter during the cleansing action. It is stated that the bristles may be "formed to controlled varying lengths and may be arranged in several different patterns to meet different requirements". The United States patent further explains that "while the bristles are shown and described as preferably being looped, it is pointed out that the diameter of the bristles is controlled according to the materials used for forming said bristles so that said bristles will have desirable and sufficient stiffness and rigidity while yet introducing a comfortable massaging and cleansing characteristic".

The invention comprises the method of making a tooth cleaning device having a flexible sheet base member to be mounted on the user's finger and a plurality of bristles carried by the base member and extending therethrough, the method comprising the steps of:

(1) providing a filament of a shrinkable material characterised by its ability to contract to a resilient reed configuration under an externally applied agent,

(2) looping said filament tightly over a forming rail, with a return bend over the top of the rail and a length of the filament along the sides of the rail,

(3) applying said agent to shrink the return bend of the filament into a tight loop which holds the side lengths together and serves as a scoop to scarf away dental plaque, and

(4) separating the formed bristles from the forming rail.

Preferably the shrinkable material is polypropylene and the shrinkage agent is heat.

The invention will be further described with reference to the accompanying drawing, in which:

Figure 1 is a plan view of one preferred embodiment of a tooth cleaning device according to the invention;

Figure 2 illustrates a fabric ground base and loops of heat shrinkable filaments as they appear when merely woven;

Figure 3 illustrates the use of forming bars in the weaving process and the application of heat to cause the filaments to contract to the bars; and

Figure 4 is a greatly enlarged section showing a tooth cleaning structure according to the invention with trapped plaque material in the loops.

This invention stems from a discovery which came through observation of the results obtained by novel tooth brushing structure of US - A - 3 905 113.

This prior patent described a brush concept which is rapidly gaining acclaim as a means for improved cleaning of tooth surfaces, especially of plaque removal.

The bristles of the patented brush have been made on a loom which produces loops of filaments, and then as in conventional practice, the loops were severed to produce individual bristles.

During the preliminary testing, it was concluded that the cut filaments were too sharp and jagged for continued use on gum tissue. Hence the bristles were polished, but were not of sufficient quality to meet the high standards demanded by the inventors.

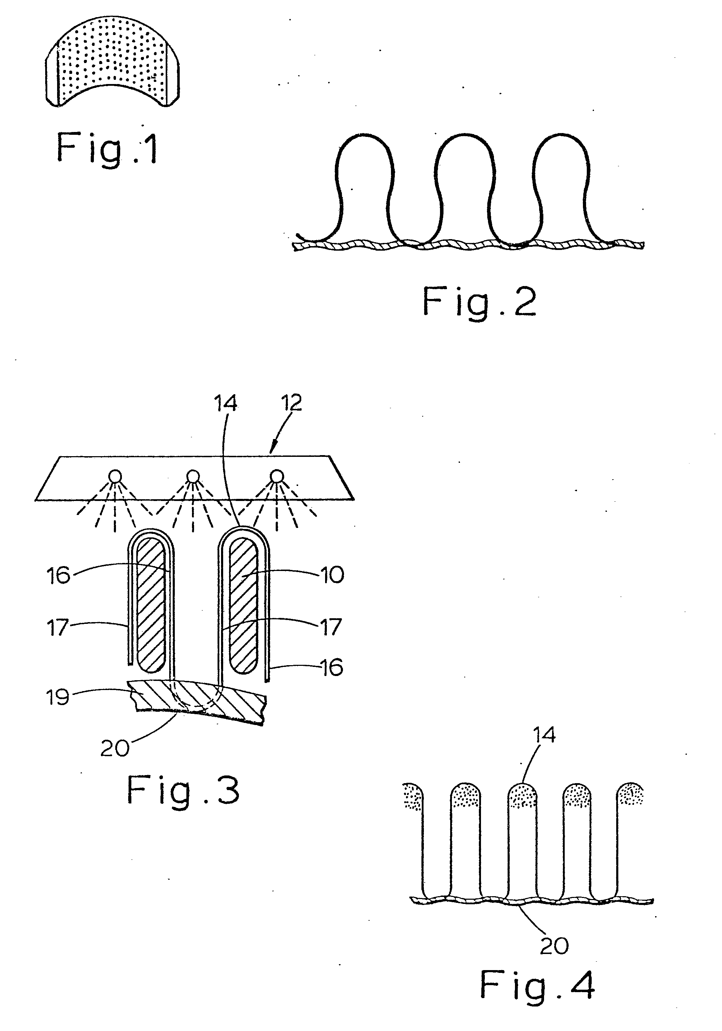

One of the materials considered for bristles was polypropylene, which is well known for its heat shrink characteristic. However, if subjected to heat without the process of this invention, the loops would merely contract into very resilient loops incapable of producing any useful scrubbing pressure. Also, flexible loops destroy the erect attitude which will transmit pressure through to the base end, which is one of the major principles of prior US - A - 3 905 113. As seen in Figure 2 of the drawing, the loops have no distinct side portions or scrubbing ends. They will simply flex under any pressure, and fail as scrubbing bristles. The Figure 2 structure is not within the scope of the invention.

Observation of the nature of heat shrink wrapping materials developed into the concept of the present invention. A test was made. The loops were woven over an elongated forming rail 10 and simultaneously heated by radiant source 12.

The result was a spectacular accomplishment in the form of a tight return bend 14 over the top of the rail 10 and side lengths 16 and 17 held in a substantially straight rod formation. When this heat shrunk loop is removed from rail 10 it retains the formation illustrated in Figure 4. The small bristle exhibits a better erect resiliency than would be possible by a mere loop structure, whether heat shrunk or not. The resiliency of the bristles is controlled by selection of filament diameter and height of the column. The best results appear to be obtained with about .178 to .228 mm. diameter filaments and a loop about 4.5 to 5.1 mm. high.

Study of this composite bristle, under magnification brought about a question of whether the naturally formed end could serve as a polished end without cutting and polishing.

It was then discovered that a unique brush bristle has been developed. The bristle, in use, has been found to not merely scarf the surface of a tooth in a superior manner, but microscopic study has shown that the return end acts as a scoop to cut into the plaque deposit and actually carry it away to a far greater extend than prior entrapment. Illustration of plaque entrapment is difficult in a line drawing. Figure 4 is a representation made from an enlargement of a photograph. The shaded areas represent entrapped plaque material as seen in an actual photomicrograph. An analogy may be made to the action of a kitchen scrub pad which actually entraps food and is later flushed free. The bristle ends will clean in the same manner as a tooth brush will clean teeth. The entrapment and scoop action is a valuable additional value produced by this invention in addition to the novel method of producing an excellent bristle end.

The inventors are aware of the desirability of the bristles to extend into the gingival sulcus. With the configuration and tightness of the loop, it has been discovered that this characteristic is retained and even improved because of the scooping action of the loop. When employed as taught in US - A - 3 905 113, by spreading over the gentle curve of the finger, the bristles being of the same length, follow the contour of the finger and bring to bear a variety of pressures utilising a multiple action of scouring, scooping, and stimulating of tooth and gum tissue.

This structure, as in US - A - 3 905 113, has a base fabric 19 woven with the bristle loops and has applied to the bottom surface thereof a layer of pressure sensitive adhesive 20 to attach the appliance to the finger. The greatly enlarge drawing exaggerates the irregularity of this layer. In plan the structure is as shown in Figure 1.

Also, the tooth brush configuration has been well accepted by veterinarians for cleaning the teeth of dogs, horses, or other domestic animals. A dog, for example, will not exhibit fear of the brush on the finger of the veterinarian, and the bristles can be structured with the proper resiliency for dog teeth.

## Claims

1. A method of making a tooth cleaning device having a flexible sheet base member to be mounted on the user's finger and a plurality of bristles carried by the base member and extending therethrough, the method comprising the steps of:

(1) providing a filament of a shrinkable material characterised by its ability to contract to a resilient reed configuration under an externally applied agent,

(2) looping said filament tightly over a forming rail, with a return bend over the top of the rail and a length of the filament along the sides of the rail,

(3) applying said agent to shrink the return bend of the filament into a tight loop which holds the side lengths together and serves as a scoop to scarf away dental plaque, and

(4) separating the formed bristles from the forming rail.

2. A method of making a tooth cleaning device having a flexible sheet base member to be mounted on the user's finger and a plurality of bristles carried by the base member and extending therethrough, the method comprising the steps of:

(1) providing a filament of plastics material heat-shrinkable to a resilient reed configuration,

(2) looping said filament tightly over a forming rail, with a return bend over the top of the rail and a length of the filament along the sides of the rail,

(3) applying heat to shrink the return bend of the filament into a tight loop which holds the side lengths together and serves as a scoop to scarf away dental plaque, and

(4) separating the formed bristles from the forming rail.

3. The method of Claim 2, wherein the shrinkable material is polypropylene.

4. The method of Claim 3, wherein the filament is of .178 to .228 mm. diameter and the loop is 4.5 to 5.1 mm. high.

**Patentansprüche**

1. Verfahren zur Herstellung einer Zahnputzvorrichtung mit einem biegsamen, auf den Finger des Benutzers zu steckenden Foliengrundglied und einer Mehrzahl von auf diesem angebrachten und dieses durchsetzende Borsten, umfassend, dass man stufenweise:

(1) ein Filament aus einem schrumpfbaren Material vorsieht, das durch seine Fähigkeit gekennzeichnet ist, sich unter einem von aussen angelegten Agens zu einer federnden Rietanordnung zusammenzuziehen,

(2) dieses Filament fest um eine Formgebungsschiene schlingt, mit einer Umkehrbiegung über die Oberseite der Schiene und einer Filamentlänge entlang den Schienenseiten,

(3) jenes Agens zur Wirkung bringt, um die Umkehrbiegung des Filaments zu einer festen Schlinge zu schrumpfen, welche die Seitenlängen zusammenhält und als Löffel dient, um Zahnbelag hinwegzubefördern, und

(4) die geformten Borsten von der Formgebungsschiene abnimmt.

2. Verfahren zur Herstellung einer Zahnputzvorrichtung mit einem biegsamen, auf den Finger des Benutzers zu steckenden Foliengrundglied und einer Mehrzahl von auf diesem angebrachten und dieses durchsetzenden Borsten, umfassend, dass man stufenweise:

(1) ein Filament aus einem zu einer federnden Rietanordnung hitzeschrumpfbaren Kunststoffmaterial vorsieht,

(2) dieses Filament fest um eine Formgebungsschiene schlingt, mit einer Umkehrbiegung über die Oberseite der Schiene und einer Filamentlänge entlang den Schienenseiten,

(3) Hitze einwirken lässt, um die Umkehrbiegung des Filaments zu einer festen Schlinge zu schrumpfen, welche die Seitenlängen zusammenhält und als Löffel dient, um Zahnbelag hinwegzubefördern und

(4) die geformten Borsten von der Formgebungsschiene abnimmt.

3. Verfahren nach Anspruch 2, worin das schrumpfbare Material Polypropylen ist.

4. Verfahren nach Anspruch 3, worin das Filament einen Durchmesser von 0,178 bis 0,228 mm aufweist und die Schlinge 4,5 bis 5,1 mm hoch ist.

**Revendications**

1. Procédé pour fabriquer un instrument pour nettoyer les dents comportant un substrat en feuille flexible à monter sur le doigt de l'utilisateur et un grand nombre de soies supportées par le substrat et le traversant caractérisé en ce que.

(1) on prévoit un filament en une matière rétrécissable, à même de se contracter en un crin élastique sous l'effet d'un agent appliqué extérieurement, .

(2) on boucle le filament étroitement sur une barre de mise en forme, de manière à obtenir un coude en U inverse sur la partie supérieure de la barre et un brin du filament de chaque côté de la barre,

(3) on applique l'agent pour faire retrécir le coude en U inverse du filament en une boucle serrée qui maintient les brins latéraux juxtaposés et sert de curette pour racler la plaque dentaire, et

(4) on sépare les soies ainsi formées de la barre de mise en forme.

2. Procédé pour fabriquer un instrument pour nettoyer les dents comportant un substrat en feuille flexible à monter sur le doigt de l'utilisateur et un grand nombre de soies supportées par le substrat et le traversant, caractérisé en ce que:

(1) on prévoit un filament en matière plastique, thermorétrécissable en un crin élastique:

(2) on boucle le filament étroitement sur une barre de mise en forme, de manière à obtenir un coude en U inverse sur la partie supérieure de la barre et un brin du filament de chaque côté de la barre.

(3) on applique de la chaleur pour faire rétrécir le coude en U inverse du filament en une boucle serrée qui maintient les brins latéraux juxtaposés et sert de curette pour racler la plaque dentaire.

(4) on sépare les soies ainsi formées de la barre de mise en forme.

3. Procédé suivant la revendication 2, caractérisé en ce que la matière rétrécissable est du polypropylène.

4. Procédé suivant la revendication 3, caractérisé en ce que le filament a un diamètre de 0,178 à 0,228 mm et la boucle a une hauteur de 4,5 à 5,1 mm.

Fig.1

Fig.2

Fig.3

Fig.4

1